# EUROPEAN PATENT SPECIFICATION

(11) **EP 3 522 606 B1**
(45) Date of publication and mention of the grant of the patent: **19.07.2023**
(21) Application number: 17854496.1
(22) Date of filing: 30.06.2017
(51) Int. Cl.: H04W 48/16, H04W 48/12, H04W 52/02

(54) **METHODS AND DEVICES FOR TRANSMITTING AND RECEIVING SYSTEM MESSAGE**
VERFAHREN UND VORRICHTUNGEN ZUM SENDEN UND EMPFANGEN EINER SYSTEMNACHRICHT
PROCÉDÉS ET DISPOSITIFS PERMETTANT DE TRANSMETTRE ET RECEVOIR UN MESSAGE SYSTÈME

(30) Priority: 28.09.2016 CN 201610862046
(43) Date of publication of application: 07.08.2019
(73) Proprietor: ZTE Corporation, Shenzhen, Guangdong 518057 (CN)
(72) Inventor: HOU, Xiaohui, Shenzhen Guangdong 518057 (CN); YAO, Xinglin, Shenzhen Guangdong 518057 (CN); YANG, Feng, Shenzhen Guangdong 518057 (CN); LU, Qinbo, Shenzhen Guangdong 518057 (CN); ZHAO, Lianfeng, Shenzhen Guangdong 518057 (CN)
(74) Representative: Aipex B.V.
(86) International application number: PCT/CN2017/091193
(87) International publication number: WO 2018/059042

(56) References cited:
- EP-A1- 2 603 038
- WO-A1-2016/053426
- CN-A- 102 348 244
- CN-A- 103 260 151
- CN-A- 103 391 515
- CN-A- 104 735 680

## Description

### TECHNICAL FIELD

The present application relates to, but is not limited to, the field of wireless communications, and in particular, relates to a method and device for transmitting a system message, and a method and device for receiving a system message.

### BACKGROUND

In the 5th Generation (5G) wireless networking, the high-frequency-band micro base station is an important networking mode due to its large bandwidth. High-frequency-band dense networking is an important scenario of 5G wireless networking. The large bandwidth characteristic can provide users with high-speed access. However, path loss of high-frequency bands such as millimeter wave bands is large, so the coverage of the base station in high-frequency bands is relatively small and much smaller than the coverage of the base station in low-frequency bands (< 3 GHz).

For the 5G networking, a reasonable solution to coverage and capacity is to use low band macro base stations for coverage and high-frequency band micro base stations for capacity. A cluster including a low-frequency-band macro base station and a group of surrounding high-frequency band micro base stations is called a base station cluster. The current system broadcast message for cells is transmitted by each cell and using its channel resources on its broadcast channel or a scheduled data sharing channel. However, in the cluster networking, if the system message is still transmitted in this way, each high-frequency-band micro base station periodically transmits system messages on its own channel resource. Since the number of micro base stations is large, this transmission method has at least two disadvantages: 1) a waste of channel resources of the micro base station; 2) a waste of a lot of transmit power from the viewpoint of energy saving. Further relevant technologies are also known from WO 2014/173429 A1 (ERICSSON TELEFON AB L M [SE]) 30 October 2014 (2014-10-30), which relates to a user equipment device operates to directly determine a target small cell for access or handover with the assistance of a macro cell network, and EP 2 603 038 A1 (HUAWEI TECH CO LTD [CN]) 12 June 2013 (2013-06-12), which relates to a cellular communication system, an inter-cell handover method for a UE, and a macro base station.

### SUMMARY

The feature of the method and apparatus according to the present invention are defined in the independent claims. Further improvements are provided in the dependent claims.

A summary of the subject matter is described hereinafter in detail. This summary is not intended to limit the scope of the claims.

Embodiments of the present invention provide a method and device for transmitting a system message, and a method and device for receiving a system message.

An embodiment of the present invention provides a method for transmitting a system message. The method includes: a macro base station transmits a system message of a micro base station cluster on a channel resource of a macrocell. The micro base station cluster includes more than two micro base stations belonging to the macro base station.

The step in which the macro base station transmits the system message of the micro base station cluster on the channel resource of the macrocell includes that: the macro base station transmits system configuration information, frequency point information, a duplex mode, and a cell identification number of each micro base station through a master information block (MIB) in the system message of the micro base station cluster. The cell identification number is used for obtaining a synchronization signal to a UE. After the system message of the micro base station cluster is transmitted to the UE and the UE is synchronized with the micro base station, the macro base station is in connection with the UE to transmit the system message of the micro base station cluster, and the change information of the system message of the micro base station cluster to the UE in real time.

An embodiment of the present invention further provides a method for receiving a system message. The method includes that: a user equipment (UE) receives a system message of a micro base station cluster transmitted on a channel resource of a macrocell by a macro base station. The micro base station cluster includes more than two micro base stations belonging to the macro base station.

The UE performs a blind search in a low-frequency band to find a system message of the macro base station.

The UE reads the system message of the macro base station to determine that the macro base station is a macro base station of the micro base station cluster.

The UE reads the system message of the micro base station cluster, and extracts frequency point information of each micro base station from an MIB.

The UE performs synchronization with a micro base station according to the frequency point information, and obtains a micro base station identifier (ID) transmitted by the micro base station.

The UE obtains system configuration information of the micro base station from the system message of the micro base station cluster according to the micro base station ID.

After the UE performs synchronization with the micro base station, the UE maintains the connection with the macro base station. While maintaining the connection with the micro base station, the UE receives the system message of the micro base station cluster transmitted by the macro base station and receives change information of the system message of the micro base station cluster transmitted by the macro base station to obtain latest system configuration information of the micro base station in real time.

An embodiment of the present invention further provides a device for transmitting a system message. The device includes a message determination unit and a transmission unit.

The message determination unit is configured to determine a system message of a micro base station cluster. The micro base station cluster includes more than two micro base stations belonging to a macro base station.

The transmission unit is configured to transmit the system message of the micro base station cluster on a channel resource of a macrocell.

The transmission unit is configured to transmit system configuration information, frequency point information, a duplex mode, and a cell identification number of each micro base station through an MIB in the system message of the micro base station cluster to a UE. The cell identification number is used for obtaining a synchronization signal. The transmission unit is configured to be in connection with the UE to transmit the system message of the micro base station cluster, and the change information of the system message of the micro base station cluster to the UE in real time after the system message of the micro base station cluster is transmitted to the UE and the UE is synchronized with the micro base station.

An embodiment of the present invention further provides a device for receiving a system message. The device includes a reception unit which is configured to receive a system message of a micro base station cluster transmitted on a channel resource of a macrocell by a macro base station. The micro base station cluster includes more than two micro base stations belonging to the macro base station.

The device further includes: a search unit and a read unit.

The search unit is configured to perform a blind search in a low-frequency band to find a system message of the macro base station.

The read unit is configured to read the system message of the macro base station and determine that the macro base station is a macro base station of the micro base station cluster.

The read unit is further configured to read the system message of the micro base station cluster, and extract frequency point information of each micro base station from an MIB.

The device further includes: a synchronization unit, which is configured to perform synchronization with a micro base station according to the frequency point information, and obtain a micro base station identifier (ID) transmitted by the micro base station; and obtain system configuration information of the micro base station from the system message of the micro base station cluster according to the micro base station ID. In the above solution, the synchronization unit is further configured to maintain the connection with the macro base station after the synchronization unit performs synchronization with the micro base station. While maintaining the connection with the micro base station, the synchronization unit receives the system message of the micro base station cluster transmitted by the macro base station and receives change information of the system message of the micro base station cluster transmitted by the macro base station, such that latest system configuration information of the micro base station is obtained in real time.

In the embodiments of the present invention, the macro base station transmits the system message of the micro base station cluster on the channel resource of the macrocell. The micro base station cluster includes more than two micro base stations belonging to the macro base station. In this way, each micro base station in the micro base station cluster does not need to transmit by itself its own system message through the channel resource of the micro cell, which saves channel resources, saves transmit power, and reduces energy consumption of the base station.

Other aspects can be understood after the drawings and detailed description are read and understood.

### BRIEF DESCRIPTION OF DRAWINGS

FIG. 1 is a schematic diagram of a cluster of cells according to an embodiment of the present invention;
FIG. 2 is a flowchart of a method for transmitting a system message according to an embodiment of the present invention;
FIG. 3 is a flowchart of a method for receiving a system message according to an embodiment of the present invention;
FIG. 4 is a schematic diagram illustrating a networking scenario 1 of cells in a cluster according to an embodiment of the present invention;
FIG. 5 is a schematic diagram illustrating a networking scenario 2 of cells in a cluster according to an embodiment of the present invention;
FIG. 6 is a structural diagram of a device for transmitting a system message according to an embodiment of the present invention; and
FIG. 7 is a structural diagram of a device for receiving a system message according to an embodiment of the present invention.

### DETAILED DESCRIPTION

Implementation of the embodiments of the present invention is described below in detail with reference to the drawings. The drawings are provided for reference only and are not intended to limit the embodiments of the present invention.

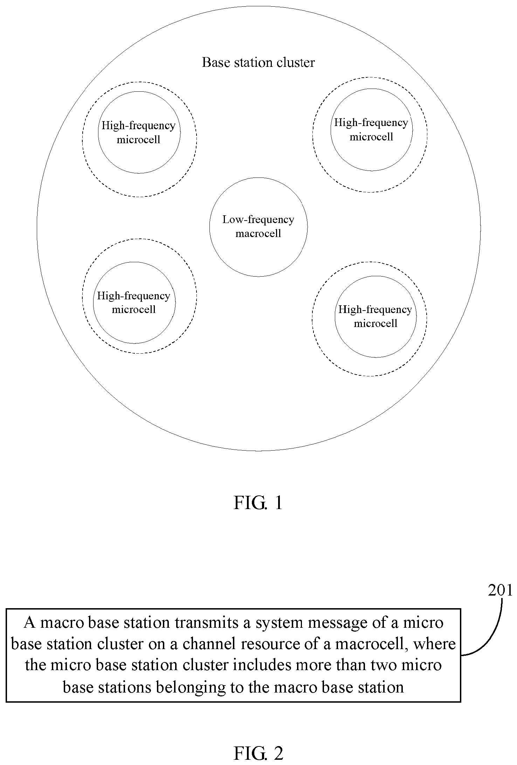

In the embodiment of the present invention, the base station cluster includes a low-frequency-band macro base station and a plurality of high-frequency-band micro base stations, and the coverage range of the macro base station is greater than or equal to the collection of the coverage ranges of the micro base stations belonging to the macro base station, as shown in FIG. 1.

First, the macro base station indicates that it is the macro base station in the base station cluster through a system message directed to the macro base station itself. In addition, for each of the micro base stations (collectively referred to as a micro base station cluster) belonging to the macro base station, the macro base station, in place of the micro base station, delivers a system message on the channel resource of the macrocell. The system message is a collection of system messages of all the micro base stations, and is called a system message collection or a system message of the micro base station cluster. The micro base station only transmits its own base station identifier (ID) on its own channel resource. This base station ID is used as an index, hereinafter referred to as ID.

In actual networking, many configuration items may be identical to the micro base stations. For these same configuration items, the macro base station only needs to transmit one piece of configuration data when the macro base station transmits the system message collection, and the repeated configuration data does not need to be repeatedly transmitted. The user equipment (UE), when reading the data, uses the piece of configuration data closest to the ID index if the number of IDs is found to be greater than the number of pieces of the configuration data.

For ease of illustration, the embodiment of the present invention provides an overall structure of the system message collection (also referred to as a system message of a micro base station cluster), as shown in Table 1, and the content of each system message is shown in Table 2.

**Table 1**

| System message collection |
|---|
| MIB |
| Micro base station ID 1 |
| MIB |
| Micro base station ID 2 |
| MIB |
| ... |
| Micro base station ID N |
| MIB |
| System information block 1 (SIB1) |
| Micro base station ID 1 |
| Micro base station SIB 1 |
| Micro base station ID 2 |
| Micro base station SIB 1 |
| ... |
| Micro base station ID N |
| Micro base station SIB 1 |
| SIB2 |
| Micro base station ID 1 |
| Micro base station SIB2 |
| Micro base station ID 2 |
| Micro base station SIB2 |
| ... |
| Micro base station ID N |
| Micro base station SIB2 |
| ... |
| SIB 13 |
| Micro base station ID 1 |
| Micro base station SIB 16 |
| Micro base station ID 2 |
| Micro base station SIB16 |
| ... |
| Micro base station ID N |
| Micro base station SIB16 |

### Table 2

**Table 2**

| IE name | IE information content |
|---|---|
| MIB | including information transmitted on a broadcast channel (BCH) |
| SIB 1 | including relevant information for evaluating whether a UE is allowed to access a cell and defining other information related to system scheduling |
| SIB2 | including common shared channel information |
| SIB3 | including cell reselection information, mainly being information related to a serving cell |
| SIB4 | including information related to the service frequency and the intra-frequency neighboring cell during cell reselection, and including cell re-selection parameters common for a frequency as well as cell specific re-selection parameters |
| SIB5 | including other information about the evolved-UMTS terrestrial radio access (E-UTRA) frequencies and the inter-frequency neighboring cell for cell re-selection, and including cell re-selection parameters common for a frequency as well as cell specific re-selection parameters |
| SIB6 | including information about the UMTS terrestrial radio access (UTRA) frequencies and the UTRA neighbouring cell relevant for cell re-selection, and including cell reselection parameters common for a frequency as well as cell specific re-selection parameters |
| SIB7 | including information about the GSM/EDGE radio access network (GERAN) frequencies, and including cell re-selection parameters common for a frequency as well as cell specific re-selection parameters |
| SIB8 | including information about CDMA2000 frequencies and CDMA2000 neighbouring cells relevant for cell re-selection, and including cell re-selection parameters common for a frequency as well as cell specific re-selection parameters |
| SIB9 | Name of a home base station |
| SIB 10 | including a primary notification of the earthquake and tsunami warning system (ETWS) |
| SIB 11 | including a secondary notification of the ETWS |
| SIB 12 | including a secondary notification of the commercial mobile alert system (CMAS) |
| SIB 13 | including control information of the multimedia broadcast multicast service (MBMS) |
| SIB 14 | including an extended access barring (EAB) parameter |
| SIB 15 | including information about MBMS service area identities (SAI), and the like |
| SIB 16 | including time information such as global positioning system (GPS) |

The system configuration information such as the bandwidth and the like does not need to be transmitted in the system message of the high-frequency micro base station in the base station cluster, and is transmitted through the MIB of the system message collection. The MIB of the low-frequency macro base station is further used for transmitting key information of the corresponding micro base station ID such as the frequency point information, the duplex mode and the like, so as to accelerate the cell search process of the UE for the high-frequency micro base station.

After the base station cluster is introduced, the cell search process of the UE is as follows.
1) The UE blindly searches for possible low-frequency bands and finds the system message of the low-frequency-band macro base station.
2) The UE reads the system information of the macro base station and determines that the macro base station belongs to the base station cluster.
3) The UE reads the system message of the base station cluster, and extracts frequency point information, a duplex mode, a cell identification number, bandwidth and other key information carried in the MIB.
4) The UE attempts to establish synchronization with the high-frequency micro base station according to the frequency point information extracted in the step 3, and reads the ID of the high-frequency micro base station. When the UE establishes synchronization with the high-frequency micro base station, the UE maintains the connection with the low-frequency macrocell to ensure that the UE can still receive the system message and a change of the system message delivered by the low-frequency macro base station while being in connection with the high-frequency micro base station.
5) The UE obtains system messages such as SIB1 to SIB13 of a target micro base station according to the ID.

So far, the UE obtains information of all cells of the cluster.

FIG. 2 is a flowchart of a method for transmitting a system message according to an embodiment of the present invention. As shown in FIG. 2, the method for transmitting a system message includes a step S201.

In the step S201, a macro base station transmits a system message of a micro base station cluster on a channel resource of a macrocell. The micro base station cluster includes more than two micro base stations belonging to the macro base station.

The system message of the micro base station cluster is a collection of system messages of all micro base stations in the micro base station cluster.

In the embodiment of the present invention, the method further includes steps described below.

The macro base station indicates, through a system message of the macro base station, that the macro base station is a macro base station of the micro base station cluster.

The macro base station transmits the system message of the macro base station on the channel resource of the macrocell.

In the embodiment of the present invention, when the macro base station transmits the system message of the micro base station cluster on the channel resource of the macrocell, for configuration data identical to all micro base stations, the macro base station transmits one piece of the configuration data.

In the embodiment of the present invention, the step in which the macro base station transmits the system message of the micro base station cluster on the channel resource of the macrocell includes that: the macro base station transmits system configuration information, frequency point information, a duplex mode, and a cell identification number of each micro base station through a MIB in the system message of the micro base station cluster. The cell identification number is used for obtaining a synchronization signal.

The system configuration information may include bandwidth information. In the traditional mechanism, the frequency point information, the duplex mode and the cell identification number do not belong to the system message, and are not transmitted to the UE through the system message, since the UE can automatically determine them through the physical layer search mechanism. In the embodiment of the present invention, not only the system configuration information but also the frequency point information, the duplex mode, the cell identification number, and the like of the micro base station are transmitted through the system message.

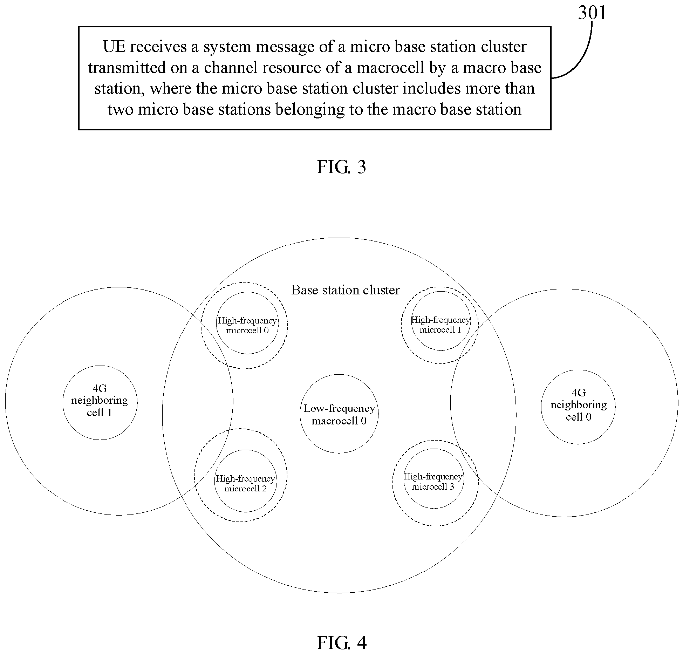

The macro base station may also transmit system configuration information of the micro base station through the SIB in the system message of the micro base station cluster. FIG. 3 is a flowchart of a method for receiving a system message according to an embodiment of the present invention. As shown in FIG. 3, the method for receiving a system message includes a step S301.

In the step S301, the UE receives a system message of a micro base station cluster transmitted on a channel resource of a macrocell by a macro base station. The micro base station cluster includes more than two micro base stations belonging to the macro base station.

In the embodiment of the present invention, the system message of the micro base station cluster is a collection of system messages of all micro base stations in the micro base station cluster.

In the embodiment of the present invention, the method further includes steps described below.

The UE performs a blind search in a low-frequency band to find a system message of the macro base station.

The UE reads the system message of the macro base station to determine that the macro base station is in the micro base station cluster.

In the embodiment of the present invention, the method further includes steps described below.

The UE reads the system message of the micro base station cluster, and extracts frequency point information of each micro base station from an MIB.

The UE establishes synchronization with the micro base station according to the frequency point information, and obtains a base station identifier (ID) transmitted by the micro base station.

The UE obtains system configuration information of the micro base station from the system message of the micro base station cluster according to the ID of the micro base station.

In the embodiment of the present invention, the method further includes steps described below.

After the UE establishes synchronization with the micro base station, the UE maintains connection with the macro base station. While maintaining the connection with the micro base station, the UE receives the system message of the micro base station cluster transmitted by the macro base station and receives change information of the system message of the micro base station cluster transmitted by the macro base station to obtain the latest system configuration information of the micro base station in real time.

The method for transmitting a system message and the method for receiving a system message of the embodiments of the present invention are further described below in conjunction with the application scenarios.

### Application scenario 1

As shown in FIG. 4, in a cell cluster, four high-frequency-band microcells belong to a macrocell, and are respectively high-frequency microcell 0, high-frequency microcell 1, high-frequency microcell 2, and high-frequency microcell 3. The frequency points of the four high-frequency-band microcells are respectively, *f*₀, *f*₁, *f*₂, and *f*₃. The duplex modes of the four high-frequency-band microcells are all time division duplexing (TDD). The bandwidth, control channel and other relevant configurations of the four high-frequency-band microcells are the same. The microcells 0 and 2 have a common 4G neighboring cell 1, and belong to the common macrocell 0 of the present cluster. The microcells 1 and 3 have a common 4G neighboring cell 0, and belong to the common macrocell 0 of the present cluster. The 4G neighboring cell 0, the 4G neighboring cell 1 and the macrocell 0 in the cluster use the same frequency *f*_{L}.

Therefore, for such a typical networking, the system message collection includes only the MIB, the SIB 1, the SIB2, the SIB3, and the SIB5. Reference may be made to Table 3 below.

**Table 3**

| System message collection |
|---|
| MIB |
| Microcell 0 |
| f0, bandwidth and other key information |
| Microcell 1 |
| f1, bandwidth and other key information |
| Microcell 2 |
| f2, bandwidth and other key information |
| Microcell 3 |
| f3, bandwidth and other key information |
| SIB 1 |
| Microcell 0 |
| Cell access and other information |
| SIB2 |
| Microcell 0 |
| Common shared channel information of the cells |
| SIB3 |
| Microcell 0 |
| Reselection information |
| SIB5 |
| Microcell 0 |
| Inter-frequency-band neighboring cell information, the frequency point *f*_{L} neighboring cell is the 4G neighboring cell 1, the frequency point is *f*_{L}, the neighboring cell is the low-frequency macrocell 0 |
| Microcell 1 |
| Inter-frequency-band neighboring cell information, the frequency point *f*_{L} neighboring cell is the 4G neighboring cell 0, the frequency point is *f*_{L}, and the neighboring cell is the low-frequency macrocell 0 |
| Microcell 2 |
| Inter-frequency-band neighboring cell information, the frequency point *f*_{L} neighboring cell is the 4G neighboring cell 1, the frequency point is *f*_{L}, and the neighboring cell is the low-frequency macrocell 0 |
| Microcell 3 |
| Inter-frequency-band neighboring cell information, the frequency point *f*_{L} neighboring cell is the 4G neighboring cell 0, the frequency point is *f*_{L}, and the neighboring cell is the low-frequency macrocell 0 |

After the cluster is introduced, the cell search process of the UE is as follows.
1) The UE blindly searches for the low-frequency-band serving cell, successfully establishes synchronization with the low-frequency macrocell 0 in the cluster, reads the system message directed to itself, and determines that it belongs to the cell cluster.
2) The UE reads the system information of the macro base station cell, and determines that the macro base station cell is in the cell cluster.
3) The UE reads the collection of system messages of the cell cluster, and extracts the frequency points *f*₀, *f*₁, *f*₂, and *f*₃ carried by the MIB information.
4) The UE attempts to establish synchronization with the high-frequency micro base station according to the frequency points extracted in the step 3, and reads the base station ID of the high-frequency micro base station. If the UE is located within the coverage range of the microcell 3, the UE successfully establishes synchronization with the microcell 3, and extracts the base station ID which is transmitted by the microcell on the broadcast channel of the microcell. In this example, the ID is 3. After the UE establishes synchronization with the high-frequency micro base station, the UE maintains the connection with the low-frequency macrocell to obtain the system message delivered by the low-frequency macrocell and the change of the system message.
5) The UE obtains system messages such as SIB 1, SIB2, SIB3, SIB5 and the like of a target micro base station according to the ID. When the UE extracts the SIB1, the SIB2, and the SIB3, since 3 is greater than 0, the system message of the base station 0, i.e., the nearest value, is taken as the system message of the present cell.

So far, the UE obtains all information about the microcell 3 and the low-frequency macrocell in the cell cluster.

### Application scenario 2

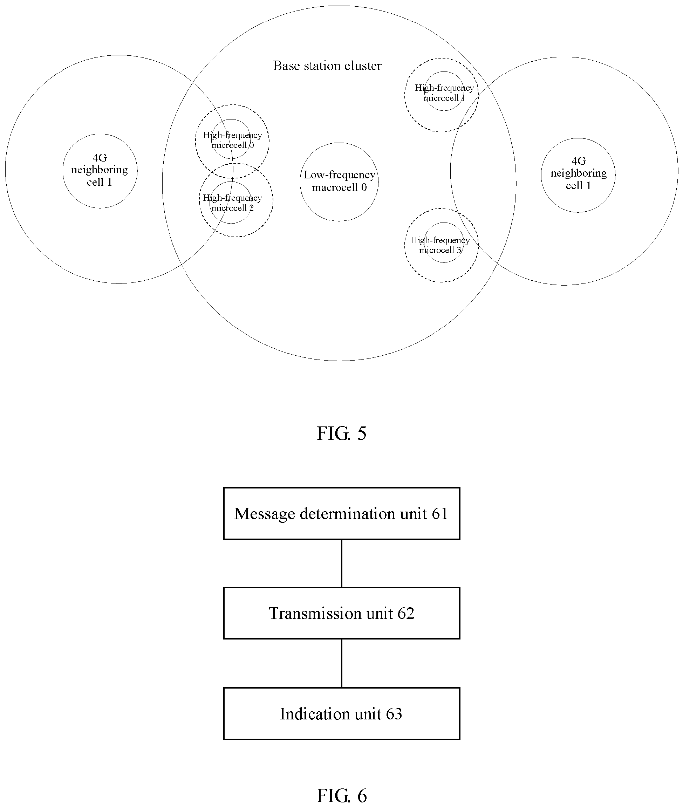

As shown in FIG. 5, in the cell cluster, four high-frequency-band microcells belong to a macrocell, and the four high-frequency-band microcells are respectively high-frequency microcell 0, high-frequency microcell 1, high-frequency microcell 2, and high-frequency microcell 3. The frequency points are respectively, *f*₀, *f*₁, *f*₂, and *f*₃. The duplex modes of the four high-frequency-band microcells are all frequency division duplexing (FDD). The bandwidth, control channel and other relevant configurations of four high-frequency-band microcells are all different from each other. The microcells 0 and 2 have a common 4G neighboring cell 1 and belong to the common macrocell 0 of the present cluster, and the microcells 0 and 2 are neighboring cell to each other. The microcells 1 and 3 have a common 4G neighboring cell 0, and belong to the common macrocell 0 of the present cluster. The 4G neighboring cell 0, the 4G neighboring cell 1 and the macrocell 0 in the cluster use the same frequency *f*_{L}. The reselection parameters and access parameters of the four microcells are all different from each other.

Therefore, for such a typical networking, the system message collection includes only the MIB, the SIB1, the SIB2, the SIB3, the SIB4 and the SIB5. The system message collection is shown in Table 4 below:

**Table 4**

| |
|---|
| System message collection |
| MIB |
| Microcell 0 |
| f0, bandwidth and other key information |
| Microcell 1 |
| f1, bandwidth and other key information |
| Microcell 2 |
| f2, bandwidth and other key information |
| Microcell 3 |
| f3, bandwidth and other key information |
| SIB 1 |
| Microcell 0 |
| Cell access information, and the like |
| Microcell 1 |
| Cell access information, and the like |
| Microcell 2 |
| Cell access information, and the like |
| Microcell 3 |
| Cell access information, and the like |
| SIB2 |
| Microcell 0 |
| Common shared channel information of the cells |
| Microcell 1 |
| Common shared channel information of the cells |
| Microcell 2 |
| Common shared channel information of the cells |
| Microcell 3 |
| Common shared channel information of the cells |
| SIB3 |
| Microcell 0 |
| Reselection information |
| Microcell 1 |
| Reselection information |
| Microcell 2 |
| Reselection information |
| Microcell 3 |
| Reselection information |
| SIB4 |
| Microcell 0 |
| Intra-frequency neighboring cell information |
| Microcell 2 |
| Intra-frequency neighboring cell information |
| SIB5 |
| Microcell 0 |
| Inter-frequency-band neighboring cell information, the frequency point *f*_{L} neighboring cell is the 4G neighboring cell 1, the frequency point is *f*_{L}, and the neighboring cell is the low-frequency macrocell 0 |
| Microcell 1 |
| Inter-frequency-band neighboring cell information in which the frequency point *f*_{L} neighboring cell is the 4G neighboring cell 0, the frequency point is *f*_{L}, and the neighboring cell is the low-frequency macrocell 0 |
| Microcell 2 |
| Inter-frequency-band neighboring cell information in which the frequency point *f*_{L} neighboring cell is the 4G neighboring cell 1, the frequency point is *f*_{L}, and the neighboring cell is the low-frequency macrocell 0 |
| Microcell 3 |
| Inter-frequency-band neighboring cell information in which the frequency point *f*_{L} neighboring cell is the 4G neighboring cell 0, the frequency point is *f*_{L}, and the neighboring cell is the low-frequency macrocell 0 |

The cell searching process and the processes of obtaining the microcell and the low-frequency macrocell in the cluster by the UE are the same as that in the example 1.

FIG. 6 is a structural diagram of a device for transmitting a system message according to an embodiment of the present invention. As shown in FIG. 6, the device includes a message determination unit 61 and a transmission unit 62.

The message determination unit 61 is configured to determine a system message of a micro base station cluster. The micro base station cluster includes more than two micro base stations belonging to a macro base station.

The transmission unit 62 is configured to transmit the system message of the micro base station cluster on a channel resource of a macrocell.

In the embodiment of the present invention, the system message of the micro base station cluster refers to a collection of system messages of all micro base stations in the micro base station cluster.

In the embodiment of the present invention, the device further includes an indication unit 63 and the transmission unit 62.

The indication unit 63 is configured to indicate, through a system message directed to the macro base station, that the macro base station is a macro base station for the micro base station cluster.

The transmission unit 62 is further configured to transmit the system message of the macro base station on the channel resource of the macrocell.

In the embodiment of the present invention, for configuration data identical to each micro base station, the transmission unit 62 is further configured to transmit one piece of the configuration data when the transmission unit transmits the system message of the micro base station cluster on the channel resource of the macrocell.

In the embodiment of the present invention, the transmission unit 62 is further configured to transmit system configuration information, frequency point information, a duplex mode, and a cell identification number of each micro base station through an MIB in the system message of the micro base station cluster. The cell identification number is used for obtaining a synchronization signal.

It should be understood by those skilled in the art that implementation of functions of various units of the device for transmitting a system message shown in FIG. 6 may be understood with reference to the relevant description of the foregoing system message transmission method. The functions of the various units of the device for transmitting a system message shown in FIG. 6 may be implemented by one or more programs running on a processor or may be implemented by one or more logic circuits.

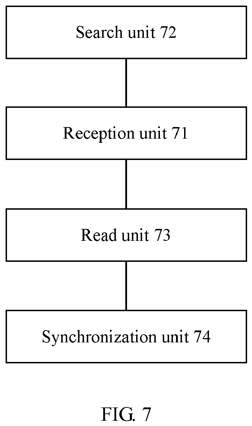

FIG. 7 is a structural diagram of a device for receiving a system message according to an embodiment of the present invention. As shown in FIG. 7, the device includes a reception unit 71.

The reception unit 71 is configured to receive a system message of a micro base station cluster, where the system message is transmitted by a macro base station on a channel resource of a macrocell. The micro base station cluster includes more than two micro base stations belonging to the macro base station.

In the embodiment of the present invention, the system message of the micro base station cluster is a collection of system messages of all micro base stations in the micro base station cluster.

In the embodiment of the present invention, the device further includes a search unit 72 and a read unit 73.

The search unit 72 is configured to perform a blind search in a low-frequency band to find a system message of the macro base station.

The read unit 73 is configured to read the system message of the macro base station to determine that the macro base station is a macro base station of the micro base station cluster.

In the embodiment of the present invention, the read unit 73 is further configured to read the system message of the micro base station cluster, and extract frequency point information of each micro base station from an MIB.

The device further includes a synchronization unit 74, which is configured to perform synchronization with a micro base station according to the frequency point information, and obtain a micro base station ID transmitted by the micro base station; and obtain system configuration information of the micro base station from the system message of the micro base station cluster according to the micro base station ID.

In the embodiment of the present invention, the synchronization unit 74 is further configured to maintain connection with the macro base station after the synchronization unit performs synchronization with the micro base station. While the connection with the micro base station is maintained, the system message of the micro base station cluster transmitted by the macro base station and change information of the system message of the micro base station cluster transmitted by the macro base station are received, such that the latest system configuration information of the micro base station is obtained in real time.

It should be understood by those skilled in the art that implementation of functions of various units of the device for receiving a system message shown in FIG. 7 may be understood with reference to the relevant description of the foregoing system message reception method. The functions of the various units of the device for receiving a system message shown in FIG. 7 may be implemented by one or more programs running on a processor or may be implemented by one or more logic circuits.

An embodiment of the present invention further provides a computer-readable storage medium configured to store computer-executable instructions. The computer-executable instructions, when executed by a processor, execute the method for transmitting a system message according to the above embodiments.

An embodiment of the present invention further provides a computer-readable storage medium configured to store computer-executable instructions. The computer-executable instructions, when executed by a processor, execute the method for receiving a system message according to the above embodiments.

It should be understood by those skilled in the art that the embodiments of the present invention may be provided as methods, systems, or computer program products. Therefore, the present application in the following forms: embodiments of hardware, embodiment of software, or embodiments of a combination of software and hardware. In addition, the present application may in the form of a computer program product implemented on one or more computer-usable storage media (including, but not limited to, a disk memory and an optical memory) that includes computer-usable program codes.

The present application is described with reference to flowcharts or block diagrams of the methods, apparatuses (systems) and computer program products according to the embodiments of the present invention. It should be understood that computer program instructions implement each flow or block in the flowcharts or block diagrams and a combination of flows or blocks in the flowcharts or block diagrams. These computer program instructions can be provided to a general-purpose computer, a special-purpose computer, an embedded processor or a processor of another programmable data processing apparatus to produce a machine so that instructions executed by a computer or the processor of another programmable data processing apparatus produce a means for implementing functions specified in one or more flows in the flowcharts or one or more blocks in the block diagrams.

These computer program instructions can also be stored in a computer-readable memory which can direct the computer or another programmable data processing apparatus to operate in a particular manner so that the instructions stored in the computer-readable memory produce a manufactured product including an instructing means. The instructing means implements the functions specified in one or more flows in the flowcharts or one or more blocks in the block diagrams.

These computer program instructions can also be loaded onto the computer or another programmable data processing apparatus so that a series of operations or steps are performed on the computer or another programmable apparatus to produce processing implemented by the computer. Therefore, instructions executed on the computer or another programmable apparatus provide steps for implementing the functions specified in one or more flows in the flowcharts or one or more blocks in the block diagrams.

The above are only embodiments of the present invention and are not intended to limit the scope of the present application, solely defined by the appended claims.

### INDUSTRIAL APPLICABILITY

In the embodiments of the present invention, the macro base station transmits the system message of the micro base station cluster on the channel resource of the macrocell. The micro base station cluster includes more than two micro base stations belonging to the macro base station. In this way, each micro base station in the micro base station cluster does not need to transmit its system message through the channel resources of the micro cell, which saves channel resources, saves transmit power, and reduces energy consumption of the base station.

## Claims

1. A method for transmitting a system message, comprising:
transmitting (201), by a macro base station, a system message of a micro base station cluster on a channel resource of a macrocell, wherein the micro base station cluster comprises more than two micro base stations belonging to the macro base station;
wherein the transmitting, by the macro base station, the system message of the micro base station cluster on the channel resource of the macrocell comprises: transmitting, by the macro base station, system configuration information, frequency point information, a duplex mode, and a cell identification number of each micro base station through a master information block, MIB, in the system message of the micro base station cluster, to a user equipment, UE, wherein the cell identification number is used for obtaining a synchronization signal;
after the system message of the micro base station cluster is transmitted to the UE and the UE is synchronized with the micro base station, the macro base station is in connection with the UE to transmit the system message of the micro base station cluster, and the change information of the system message of the micro base station cluster to the UE in real time.

2. The method of claim 1, wherein the system message of the micro base station cluster is a collection of system messages of all micro base stations in the micro base station cluster.

3. The method of claim 1, further comprising:
indicating, by the macro base station and through a system message of the macro base station, that the macro base station is a macro base station of the micro base station cluster; and
transmitting, by the macro base station, the system message of the macro base station on the channel resource of the macrocell.

4. The method of claim 1, wherein for configuration data identical to each micro base station, transmitting, by the macro base station, one piece of the configuration data when the macro base station transmits the system message of the micro base station cluster on the channel resource of the macrocell.

5. A method for receiving a system message, comprising:
receiving (301), by a user equipment, UE, a system message of a micro base station cluster, wherein the system message is transmitted on a channel resource of a macrocell by a macro base station, and the micro base station cluster comprises more than two micro base stations belonging to the macro base station;
wherein the method further comprises:
performing, by the UE, a blind search in a low-frequency band to find a system message of the macro base station;
reading, by the UE, the system message of the macro base station to determine that the macro base station is a macro base station of the micro base station cluster;
reading, by the UE, the system message of the micro base station cluster, and extracting frequency point information of each micro base station from a master information block, MIB;
performing, by the UE, synchronization with a micro base station according to the respective frequency point information, and obtaining a micro base station identifier, ID, transmitted by the micro base station; and
obtaining, by the UE, system configuration information of the micro base station from the system message of the micro base station cluster according to the micro base station ID;
after the UE is synchronized with the micro base station, maintaining, by the UE, connection with the macro base station, wherein while the UE maintains a connection with the micro base station, the UE receives the system message of the micro base station cluster transmitted by the macro base station and receives change information of the system message of the micro base station cluster transmitted by the macro base station to obtain latest system configuration information of the micro base station in real time.

6. The method of claim 5, wherein the system message of the micro base station cluster is a collection of system messages of all micro base stations in the micro base station cluster.

7. A macro base station device for transmitting a system message, comprising:
a message determination unit (61), configured to determine a system message of a micro base station cluster, wherein the micro base station cluster comprises more than two micro base stations belonging to a macro base station; and
a transmission unit (62), configured to transmit the system message of the micro base station cluster on a channel resource of a macrocell,
wherein the transmission unit (62) is configured to transmit system configuration information, frequency point information, a duplex mode, and a cell identification number of each micro base station through a master information block, MIB, in the system message of the micro base station cluster, to a user equipment, UE, wherein the cell identification number is used for obtaining a synchronization signal;
wherein the transmission unit (62) is configured to be in connection with the UE to transmit the system message of the micro base station cluster, and the change information of the system message of the micro base station cluster to the UE in real time after the system message of the micro base station cluster is transmitted to the UE and the UE is synchronized with the micro base station.

8. The device of claim 7, wherein the system message of the micro base station cluster is a collection of system messages of all micro base stations in the micro base station cluster.

9. The device of claim 7, further comprising: an indication unit (63), which is configured to indicate, through a system message of the macro base station, that the macro base station is a macro base station of the micro base station cluster;
wherein the transmission unit is further configured to transmit the system message of the macro base station on the channel resource of the macrocell.

10. The device of claim 7, wherein for configuration data identical to each micro base station, the transmission unit is further configured to transmit one piece of the configuration data when the transmission unit transmits the system message of the micro base station cluster on the channel resource of the macrocell.

11. A user equipment, UE, device for receiving a system message, comprising:
a reception unit (71), configured to receive a system message of a micro base station cluster transmitted on a channel resource of a macrocell by a macro base station, wherein the micro base station cluster comprises more than two micro base stations belonging to the macro base station,
a search unit (72), configured to perform a blind search in a low-frequency band to find a system message of the macro base station;
a read unit (73), configured to read the system message of the macro base station to determine that the macro base station is a macro base station of the micro base station cluster;
wherein the read unit (73) is further configured to read the system message of the micro base station cluster, and extract frequency point information of each micro base station from a master information block, MIB; and
a synchronization unit (74), configured to perform synchronization with a micro base station according to the respective frequency point information, and obtain a micro base station identifier, ID, transmitted by the micro base station; and obtain system configuration information of the micro base station from the system message of the micro base station cluster according to the micro base station ID;
wherein the synchronization unit (74) is further configured to maintain a connection with the macro base station after the synchronization unit performs synchronization with the micro base station, wherein while maintaining the connection with the micro base station, the synchronization unit receives the system message of the micro base station cluster transmitted by the macro base station and receives change information of the system message of the micro base station cluster transmitted by the macro base station to obtain latest system configuration information of the micro base station in real time.

12. The device of claim 11, wherein the system message of the micro base station cluster is a collection of system messages of all micro base stations in the micro base station cluster.

## Patentansprüche

1. Verfahren zum Übertragen einer Systemnachricht, das Folgendes umfasst:
Übertragen (201) durch eine Makrobasisstation einer Systemnachricht eines Mikrobasisstations-Clusters auf einer Kanalressource einer Makrozelle, wobei der Mikrobasisstations-Cluster mehr als zwei Mikrobasisstationen umfasst, die zu der Makrobasisstation gehören;
wobei das Übertragen durch die Makrobasisstation der Systemnachricht des Mikrobasisstations-Clusters auf der Kanalressource der Makrozelle Folgendes umfasst: Übertragen durch die Makrobasisstation von Systemkonfigurationsinformationen, Frequenzpunktinformationen, einem Duplexmodus und einer Zellidentifikationsnummer jeder Mikrobasisstation durch einen Master-Informationsblock (MIB) in der Systemnachricht des Mikrobasisstations-Clusters an ein Benutzergerät (UE), wobei die Zellidentifikationsnummer zum Erhalten eines Synchronisationssignals verwendet wird;
nachdem die Systemnachricht des Mikrobasisstations-Clusters an das UE übertragen hat und das UE mit der Mikrobasisstation synchronisiert wurde, die Makrobasisstation mit dem UE in Verbindung steht, um die Systemnachricht des Mikrobasisstations-Clusters, und die Änderungsinformationen der Systemnachricht des Mikrobasisstations-Clusters an das UE in Echtzeit zu übertragen.

2. Verfahren nach Anspruch 1, wobei die Systemnachricht des Mikrobasisstations-Clusters eine Sammlung von Systemnachrichten aller Mikrobasisstationen in dem Mikrobasisstations-Cluster ist.

3. Verfahren nach Anspruch 1, das ferner Folgendes umfasst:
Angeben durch die Makrobasisstation und durch eine Systemnachricht der Makrobasisstation, dass die Makrobasisstation eine Makrobasisstation des Mikrobasisstations-Clusters ist; und
Übertragen durch die Makrobasisstation der Systemnachricht der Makrobasisstation auf der Kanalressource der Makrozelle.

4. Verfahren nach Anspruch 1, wobei für Konfigurationsdaten, die mit jeder Mikrobasisstation identisch sind, durch die Makrobasisstation ein Teil der Konfigurationsdaten übertragen wird, wenn die Makrobasisstation die Systemnachricht des Mikrobasisstations-Clusters auf der Kanalressource der Makrozelle überträgt.

5. Verfahren zum Empfangen einer Systemnachricht, das Folgendes umfasst:
Übertragen (301) durch ein Benutzergerät, UE, einer Systemnachricht eines Mikrobasisstations-Clusters, wobei die Systemnachricht auf einer Kanalressource einer Makrozelle durch eine Makrobasisstation übertragen wird, und der Mikrobasisstations-Cluster mehr als zwei Mikrobasisstationen, die zu der Makrobasisstation gehören, umfasst;
wobei das Verfahren ferner Folgendes umfasst:
Durchführen durch das UE einer Blindsuche in einem Niederfrequenzband, um eine Systemnachricht der Makrobasisstation zu finden;
Lesen durch das UE der Systemnachricht der Makrobasisstation, um zu bestimmen, dass die Makrobasisstation eine Makrobasisstation des Mikrobasisstations-Clusters ist;
Lesen durch das UE der Systemnachricht des Mikrobasisstations-Clusters, und Extrahieren von Frequenzpunktinformationen jeder Mikrobasisstation aus einem Master-Informationsblock, MIB;
Durchführen durch das UE von Synchronisation mit einer Mikrobasisstation gemäß den jeweiligen Frequenzpunktinformationen, und Erhalten einer Mikrobasisstationskennung, ID, die von der Mikrobasisstation übertragen wird; und
Erhalten durch das UE von Systemkonfigurationsinformationen der Mikrobasisstation aus der Systemnachricht des Mikrobasisstations-Clusters gemäß der Mikrobasisstations-ID;
nachdem das UE mit der Mikrobasisstation synchronisiert wurde, Aufrechterhalten durch das UE der Verbindung mit der Makrobasisstation, wobei, während das UE eine Verbindung mit der Mikrobasisstation aufrechterhält, das UE die Systemnachricht des Mikrobasisstations-Clusters, die von der Makrobasisstation übertragen wird, und Änderungsinformationen der Systemnachricht des Mikrobasisstations-Clusters, die von der Makrobasisaktionen übertragen werden, empfängt, um die neuesten Systemkonfigurationsinformationen der Mikrobasisstation in Echtzeit zu erhalten.

6. Verfahren nach Anspruch 5, wobei die Systemnachricht des Mikrobasisstations-Clusters eine Sammlung von Systemnachrichten aller Mikrobasisstationen in dem Mikrobasisstations-Cluster ist.

7. Makrobasisstationsvorrichtung zum Übertragen einer Systemnachricht, die Folgendes umfasst:
eine Nachrichtenbestimmungseinheit (61), die dazu konfiguriert ist, eine Systemnachricht eines Mikrobasisstations-Clusters zu bestimmen, wobei der Mikrobasisstations-Cluster mehr als zwei Mikrobasisstationen umfasst, die zu einer Makrobasisstation gehören; und
eine Übertragungseinheit (62), die dazu konfiguriert ist, die Systemnachricht des Mikrobasisstations-Clusters auf einer Kanalressource einer Makrozelle zu übertragen,
wobei die Übertragungseinheit (62) dazu konfiguriert ist, Systemkonfigurationsinformationen, Frequenzpunktinformationen, einen Duplexmodus und eine Zellenidentifikationsnummer jeder Mikrobasisstation durch einen Master-Informationsblock, MIB, in der Systemnachricht des Mikrobasisstations-Clusters an ein Benutzergerät, UE, zu übertragen, wobei die Zellenidentifikationsnummer zum Erhalten eines Synchronisationssignals verwendet wird;
wobei die Übertragungseinheit (62) dazu konfiguriert ist, mit dem UE in Verbindung zu stehen, um die Systemnachricht des Mikrobasisstations-Clusters und die Änderungsinformationen der Systemnachricht des Mikrobasisstations-Clusters an das UE in Echtzeit zu übertragen, nachdem die Systemnachricht des Mikrobasisstations-Clusters an das UE übertragen wurde und das UE mit der Mikrobasisstation synchronisiert ist.

8. Verfahren nach Anspruch 7, wobei die Systemnachricht des Mikrobasisstations-Clusters eine Sammlung von Systemnachrichten aller Mikrobasisstationen in dem Mikrobasisstations-Cluster ist.

9. Vorrichtung nach Anspruch 7, die ferner Folgendes umfasst:
eine Angabeeinheit (63), die dazu konfiguriert ist, durch eine Systemnachricht der Makrobasisstation anzugeben, dass die Makrobasisstation eine Makrobasisstation des Mikrobasisstations-Clusters ist;
wobei die Übertragungseinheit ferner dazu konfiguriert ist, die Systemnachricht der Makrobasisstation auf der Kanalressource der Makrozelle zu übertragen.

10. Vorrichtung nach Anspruch 7, wobei für Konfigurationsdaten, die mit jeder Mikrobasisstation identisch sind, die Übertragungseinheit ferner dazu konfiguriert ist, einen Teil der Konfigurationsdaten zu übertragen, wenn die Übertragungseinheit die Systemnachricht des Mikrobasisstations-Clusters auf der Kanalressource der Makrozelle überträgt.

11. Benutzergerät (UE), Vorrichtung zum Empfangen einer Systemnachricht, das/die Folgendes umfasst:
eine Empfangseinheit (71), die dazu konfiguriert ist, eine Systemnachricht eines Mikrobasisstations-Clusters zu empfangen, die auf einer Kanalressource einer Makrozelle durch eine Makrobasisstation übertragen wird, wobei der Mikrobasisstation-Cluster mehr als zwei Mikrobasisstationen, die zu der Makrobasisstation gehören, umfasst,
eine Sucheinheit (72), die dazu konfiguriert ist, eine Blindsuche in einem Niederfrequenzband durchzuführen, um eine Systemnachricht der Makrobasisstation zu finden;
eine Leseeinheit (73), die dazu konfiguriert ist, die Systemnachricht der Makrobasisstation zu lesen, um zu bestimmen, dass die Makrobasisstation eine Makrobasisstation des Mikrobasisstations-Clusters ist;
wobei die Leseeinheit (73) ferner dazu konfiguriert ist, die Systemnachricht des Mikrobasisstations-Clusters zu lesen und Frequenzpunktinformationen jeder Mikrobasisstation aus einem Master-Informationsblock, MIB, zu extrahieren; und
eine Synchronisationseinheit (74), die dazu konfiguriert ist, eine Synchronisation mit einer Mikrobasisstation gemäß den jeweiligen Frequenzpunktinformationen durchzuführen und eine Mikrobasisstationskennung (ID) zu erhalten, die von der Mikrobasisstation übertragen wird; und
Systemkonfigurationsinformationen der Mikrobasisstation aus der Systemnachricht des Mikrobasisstations-Clusters gemäß der Mikrobasisstations-ID zu erhalten;
wobei die Synchronisationseinheit (74) ferner dazu konfiguriert ist, eine Verbindung mit der Makrobasisstation aufrechtzuerhalten, nachdem die Synchronisationseinheit Synchronisation mit der Mikrobasisstation durchgeführt hat, wobei, während des Aufrechterhaltens der Verbindung mit der Mikrobasisstation die Synchronisationseinheit die Systemnachricht des Mikrobasisstations-Clusters, die von der Makrobasisstation übertragen wird, empfängt, und Änderungsinformationen der Systemnachricht des Mikrobasisstation-Clusters, die von der Makrobasisstation übertragen werden, empfängt, um neueste Systemkonfigurationsinformationen der Mikrobasisstation in Echtzeit zu erhalten.

12. Vorrichtung nach Anspruch 11, wobei die Systemnachricht des Mikrobasisstations-Clusters eine Sammlung von Systemnachrichten aller Mikrobasisstationen in dem Mikrobasisstations-Cluster ist.

## Revendications

1. Procédé de transmission d'un message système, comprenant :
la transmission (201), par une macrostation de base, d'un message système d'un groupe de microstations de base sur une ressource de canal d'une macrocellule, dans lequel le groupe de microstations de base comprend plus de deux microstations de base appartenant à la macrostation de base ;
dans lequel la transmission, par la macrostation de base, du message système du groupe de microstations de base sur la ressource de canal de la macrocellule comprend : la transmission, par la macrostation de base, d'informations de configuration système, d'informations de point de fréquence, d'un mode duplex et d'un numéro d'identification de cellule de chaque microstation de base via un bloc d'informations maître, MIB, dans le message système du groupe de microstations de base, à un équipement utilisateur, UE, dans lequel le numéro d'identification de cellule est utilisé pour obtenir un signal de synchronisation ;
après que le message système du groupe de microstations de base a été transmis à l'UE et que l'UE est synchronisé avec la microstation de base, la macrostation de base est en connexion avec l'UE pour transmettre le message système du groupe de microstations de base, et les informations de changement du message système du groupe de microstations de base à l'UE en temps réel.

2. Procédé selon la revendication 1, dans lequel le message système du cluster de microstations de base est une collection de messages système de toutes les microstations de base dans le groupe de microstations de base.

3. Procédé selon la revendication 1, comprenant en outre :
l'indication, par la macrostation de base et via un message système de la macrostation de base, que la macrostation de base est une macrostation de base du groupe de microstations de base ; et
la transmission, par la macrostation de base, du message système de la macrostation de base sur la ressource de canal de la macrocellule.

4. Procédé selon la revendication 1, dans lequel pour des données de configuration identiques à chaque microstation de base, la macrostation de base transmet une partie des données de configuration lorsque la macrostation de base transmet le message système du groupe de microstations de base sur la ressource de canal de la macrocellule.

5. Procédé de réception d'un message système, comprenant :
la réception (301), par un équipement utilisateur, UE, d'un message système d'un groupe de microstations de base, dans lequel le message système est transmis sur une ressource de canal d'une macrocellule, et le groupe de microstations de base comprend plus de deux microstations de base appartenant à la macrostation de base ;
dans lequel le procédé comprend en outre :
la réalisation, par l'UE, d'une recherche aveugle dans une bande basse fréquence pour trouver un message système de la macrostation de base ;
la lecture, par l'UE, du message système de la macrostation de base pour déterminer que la macrostation de base est une macrostation de base du groupe de microstations de base ;
la lecture, par l'UE, du message système du groupe de microstations de base, et l'extraction des informations de point de fréquence de chaque microstation de base à partir d'un bloc d'informations maître, MIB ;
la réalisation, par l'UE, d'une synchronisation avec une microstation de base selon les informations de point de fréquence respectives, et l'obtention d'un identifiant de microstation de base, ID, transmis par la microstation de base ; et
l'obtention, par l'UE, des informations de configuration système de la microstation de base à partir du message système du groupe de microstations de base selon l'ID de microstation de base ;
après que l'UE est synchronisé avec la microstation de base, le maintien, par l'UE, de la connexion avec la macrostation de base, dans lequel tandis que l'UE maintient une connexion avec la microstation de base, l'UE reçoit le message système du groupe de microstations de base transmis par la macrostation de base et reçoit des informations de changement du message système du groupe de microstations de base transmises par la macrostation de base pour obtenir les dernières informations de configuration système de la microstation de base en temps réel.

6. Procédé selon la revendication 5, dans lequel le message système du groupe de microstations de base est une collection de messages système de toutes les microstations de base dans le groupe de microstations de base.

7. Dispositif de macrostation de base pour transmettre un message système, comprenant :
une unité de détermination de message (61), configurée pour déterminer un message système d'un groupe de microstations de base, dans lequel le groupe de microstations de base comprend plus de deux microstations de base appartenant à une macrostation de base ; et
une unité de transmission (62), configurée pour transmettre le message système du groupe de microstations de base sur une ressource de canal d'une macrocellule,
dans lequel l'unité de transmission (62) est configurée pour transmettre des informations de configuration de système, des informations de point de fréquence, un mode duplex et un numéro d'identification de cellule de chaque microstation de base via un bloc d'informations maître, MIB, dans le message système du groupe de microstation de base, à un équipement utilisateur, UE, dans lequel le numéro d'identification de cellule est utilisé pour obtenir un signal de synchronisation ;
dans lequel l'unité de transmission (62) est configurée pour être en connexion avec l'UE pour transmettre le message système du groupe de microstations de base, et les informations de changement du message système du groupe de micorstation de base à l'UE en temps réel après que le message système du groupe de microstation de base a été transmis à l'UE et que l'UE est synchronisé avec la microstation de base.

8. Dispositif selon la revendication 7, dans lequel le message système du groupe de microstations de base est une collection de messages système de toutes les microstations de base dans le groupe de microstations de base.

9. Dispositif selon la revendication 7, comprenant en outre :
une unité d'indication (63), qui est configurée pour indiquer, par un message système de la macrostation de base, que la macrostation de base est une macrostation de base du groupe de microstations de base ;
dans lequel l'unité de transmission est en outre configurée pour transmettre le message système de la macrostation de base sur la ressource de canal de la macrocellule.

10. Dispositif selon la revendication 7, dans lequel pour des données de configuration identiques à chaque microstation de base, l'unité de transmission est en outre configurée pour transmettre une partie des données de configuration lorsque l'unité de transmission transmet le message système du groupe de microstations de base sur la ressource de canal de la macrocellule.

11. Dispositif d'équipement utilisateur, UE, pour recevoir un message système, comprenant :
une unité de réception (71), configurée pour recevoir un message système d'un groupe de microstation de base transmis sur une ressource de canal d'une macrocellule par une macrostation de base, dans lequel le groupe de microstations de base comprend plus de deux microstations de base appartenant à la macrostation de base ;
une unité de recherche (72), configurée pour réaliser une recherche aveugle dans une bande basse fréquence pour trouver un message système de la macrostation de base ;
une unité de lecture (73), configurée pour lire le message système de la macrostation de base pour déterminer que la macrostation de base est une macrostation de base du groupe de microstations de base ;
dans lequel l'unité de lecture (73) est en outre configurée pour lire le message système du groupe de microstations de base et extraire des informations de point de fréquence de chaque microstation de base à partir d'un bloc d'informations maître, MIB ; et
une unité de synchronisation (74), configurée pour réaliser une synchronisation avec une microstation de base selon les informations de point de fréquence respectives, et obtenir un identifiant de microstation de base, ID, transmis par la microstation de base ; et obtenir des informations de configuration système de la microstation de base à partir du message système du groupe de microstations de base selon l'ID de microstation de base ;
dans lequel l'unité de synchronisation (74) est en outre configurée pour maintenir une connexion avec la macrostation de base après que l'unité de synchronisation a réalisé la synchronisation avec la microstation de base, dans lequel tandis qu'elle maintient la connexion avec la microstation de base, l'unité de synchronisation reçoit le message système du groupe de microstations de base transmis par la macrostation de base et reçoit des informations de changement du message système du groupe de microstations de base transmises par la macrostation de base pour obtenir les dernières informations de configuration système de la microstation de base en temps réel.

12. Dispositif selon la revendication 11, dans lequel le message système du groupe de microstations de base est une collection de messages système de toutes les microstations de base dans le groupe de microstations de base.
